# EUROPEAN PATENT SPECIFICATION

(11) **EP 4 068 082 B1**
(45) Date of publication and mention of the grant of the patent: **24.04.2024**
(21) Application number: 21182257.2
(22) Date of filing: 29.06.2021
(51) Int. Cl.: G06F 8/61

(54) **INFORMATION PROCESSING METHOD AND APPARATUS, TERMINAL DEVICE, AND STORAGE MEDIUM**
INFORMATIONSVERARBEITUNGSVERFAHREN UND -EINRICHTUNG, ENDGERÄTEVORRICHTUNG UND SPEICHERMEDIUM
PROCÉDÉ ET APPAREIL DE TRAITEMENT D'INFORMATIONS, DISPOSITIF TERMINAL ET SUPPORT D'ENREGISTREMENT

(30) Priority: 29.03.2021 CN 202110334797
(43) Date of publication of application: 05.10.2022
(73) Proprietor: Beijing Xiaomi Mobile Software Co., Ltd., Beijing 100085 (CN)
(72) Inventor: LIU, Lijun, Beijing, 100085 (CN); LIANG, Yingying, Beijing, 100085 (CN); LU, Chunyi, Beijing, 100085 (CN)
(74) Representative: Kudlek, Franz Thomas

(56) References cited:
- US-A1- 2021 055 922

## Description

### TECHNICAL FIELD

The disclosure generally relates to the technical field of communications, and more particularly, to an information processing method and apparatus, a terminal device, and a storage medium.

### BACKGROUND

With the development of electronic technologies, functions of terminal devices have become more and more powerful, and various applications (Apps) have also emerged. There are many Apps, and thus a user may uninstall some Apps to reduce Apps. Therefore, after the Apps are uninstalled and/or after a device leaves the factory and/or is recovered to a factory setting after used for a period of time, some Apps that may be used by the user may be deleted from the terminal device. In addition, the user may use these deleted Apps, and if the user temporarily needs to manually download the Apps, the terminal device is apparently not so intelligent and cannot respond to operations of the user timely, which may further cause reduction in user satisfaction.

Related technology is known from US2021/0055922A1.

### SUMMARY

The disclosure provides an information processing method and apparatus, a terminal device, and a storage medium.

An information processing method and apparatus, as well as a computer-readable storage medium according to the present invention are defined in the independent claims. Advantageous embodiments are the subject matter of the dependent claims..

The technical solutions provided in the embodiments of the disclosure may have the following beneficial effects.

Even for the first App that is deleted from the terminal device (i.e., the first App that is not installed), the icon and null file of the first App are pre-stored, so that the condition that the file of the first App cannot be created because the first App that is deleted from the terminal device may be avoided. After the creation operation acting on the App icon of the first App is detected, the pre-stored null file of the first App may be read automatically, and the target file may be created based on the null file. Therefore, in the embodiments of the disclosure, even though a certain App is deleted from the terminal device, some file creation functions of the App are still retained, which enriches functions of the terminal device, and improves the intelligence of the terminal device. Compared with the manner of creating the target file after the first App is installed, the embodiments have the advantage that the creation efficiency of the target file is improved.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flow chart showing an information processing method, according to an exemplary embodiment.
FIG. 2A is a schematic diagram illustrating creation of a file, according to an exemplary embodiment.
FIG. 2B is a schematic diagram illustrating creation of a file, according to an exemplary embodiment.
FIG. 2C is a schematic diagram illustrating creation of a file, according to an exemplary embodiment.
FIG. 2D is a schematic diagram illustrating creation of a file, according to an exemplary embodiment.
FIG. 2E is a schematic diagram illustrating a target file display effect, according to an exemplary embodiment.
FIG. 3A is a flow chart showing an information processing method, according to an exemplary embodiment.
FIG. 3B is a flow chart showing an information processing method, according to an exemplary embodiment.
FIG. 4 is a structure diagram of an information processing apparatus, according to an exemplary embodiment.
FIG. 5 is a structure diagram of user equipment (UE), according to an exemplary embodiment.
FIG. 6 is a structure diagram of a base station, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses consistent with aspects related to the disclosure as recited in the appended claims.

Reference throughout this specification to "one embodiment," "an embodiment," "an example," "some embodiments," "some examples," or similar language means that a particular feature, structure, or characteristic described is included in at least one embodiment or example. Features, structures, elements, or characteristics described in connection with one or some embodiments are also applicable to other embodiments, unless expressly specified otherwise.

The terms "module," "sub-module," "circuit," "sub-circuit," "circuitry," "sub-circuitry," "unit," or "sub-unit" may include memory (shared, dedicated, or group) that stores code or instructions that can be executed by one or more processors. A module may include one or more circuits with or without stored code or instructions. The module or circuit may include one or more components that are directly or indirectly connected. These components may or may not be physically attached to, or located adjacent to, one another.

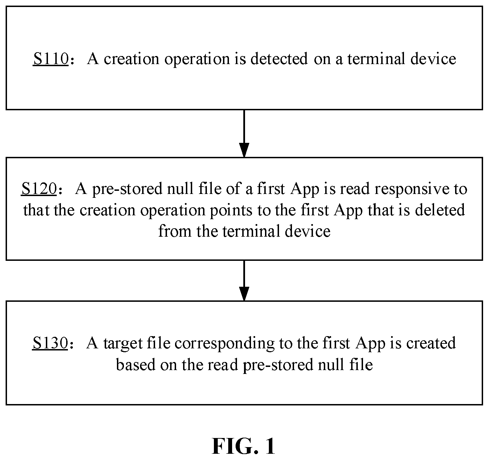

As illustrated in FIG. 1, an embodiment of the disclosure provides an information processing method, which includes the following operations. The method may be performed by a terminal device.

At S110, a creation operation is detected on a terminal device.

At S120, a pre-stored null file of a first App is read responsive to that the creation operation points to the first App that is deleted from the terminal device.

At S130, a target file corresponding to the first App is created based on the read pre-stored null file.

The information processing method may be applied to a terminal device.

The terminal device may be a terminal device of any form, such as a fixed terminal and/or a mobile terminal. The fixed terminal may include a personal computer (PC) and the like. The mobile terminal may include a mobile phone, a tablet computer, a wearable device, a two-in-one device of a mobile phone and a pad, a two-in-one device of a pad and a computer, a vehicle-mounted device, and the like.

In some embodiments, the creation operation may be a creation operation acting on an App name of each App, or may be a creation operation acting on an App icon of each App.

Here, the operation that the creation operation points to the first App can be understood as that a file instructed to be created by the creation operation is a file required to be created by the first App or a file created based on the first App.

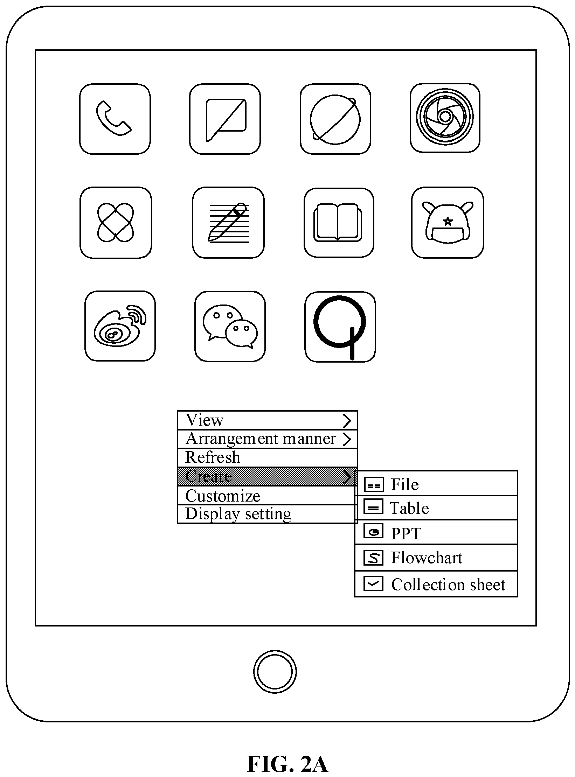

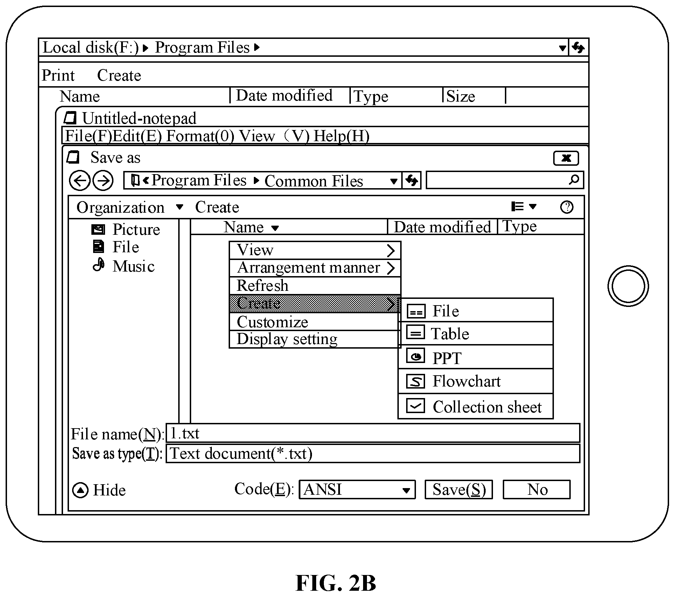

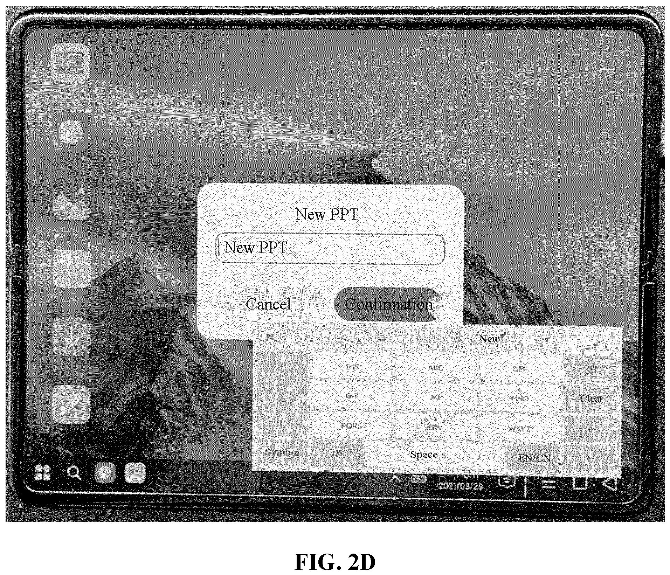

In some embodiments, the creation operation may be a creation operation based on a menu bar where an App icon of the first App is displayed, or may be a creation operation based on a dialog box where the App icon of the first App is displayed. FIG. 2A and FIG. 2B show two file creation manners. The App icon of the first App may be displayed in a stacked pull-down menu. The creation operation may be a creation operation acting on menu bars illustrated in FIG. 2A to FIG. 2C, or may be a creation operation acting on a dialog box illustrated in FIG. 2D.

The creation operations illustrated in FIG. 2A and FIG. 2B are creation operations acting on the App icon.

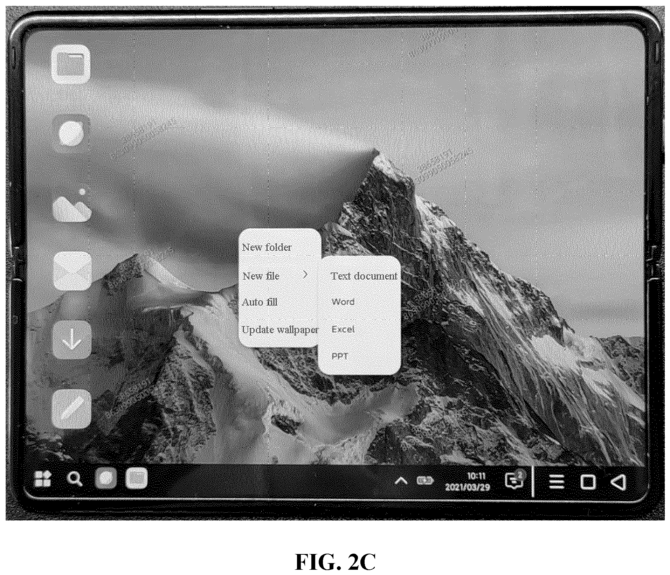

The creation operations illustrated in FIG. 2C and FIG. 2D are creation operations acting on the App name.

Exemplarily, the creation operation may be a creation operation acting on the App icon directly displayed on a desktop, a minus one screen or any position under a disk directory.

In some embodiments, a creation operation is detected, and the creation operation is generated based on an App icon, such as a mouse operation acting on the App icon, a keyboard operation acting on the App icon, a touch operation acting on the App icon, and the like.

When it is found that the App icon that the present creation operation acts on is the App icon of the App that is deleted from the terminal device, the pre-stored null file of the first App needs to be read.

Here, the first App that is deleted from the terminal device can be understood as an App that is not installed in the terminal device.

The null file is a file not edited with any content. The null file has been created, and after the file is opened, there is no content that has been edited.

Here, a type of the null file includes, but is not limited to, various editable files such as office files of various types of office software, and various editable image-format files such as portable document format (PDF) files or files generated by pictures.

Common office software may include at least one of: a Word file, an Excel file, a power point (PPT) file or a Visio file.

In the embodiment of the disclosure, the pre-stored null file at least stores a file header of the null file, but the file has no contents. Here, pre-storage may refer to that the file is stored in a cache space. When the target file is created, the null file in the cache space may directly be copied to a corresponding disk. Storing the null file in the cache space may achieve the characteristic of high creation efficiency of the target file.

In some embodiments, the null file may be a hidden file and be invisible to the user, for example, stored together with another invisible file in an operating system, so that the user cannot operate the hidden file, and the phenomenon that the null file is detected by a misoperation of the user is reduced.

If the null file is a hidden file, a file attribute of the file is set to be hidden when the file is stored.

The method further includes: information indicating a corresponding relationship between the App icon of the first App and the null file is stored. In such a manner, after the creation operation acting on the App icon of the first App is detected, a storage address of the null file is determined directly based on the corresponding relationship, and the null file is read from the storage address. For example, the information indicating the corresponding relationship may include link information between address information of the storage address of the null file and the App icon. For another example, the information indicating the corresponding relationship may include a corresponding relationship between App identification information of the first App and the address information of the storage address of the null file, and also includes the App icon of the first App and the App identification information of the first App.

If there are multiple first Apps, a list of information indicating such corresponding relationships related to the first Apps may be stored in the operating system for unified information management.

In some embodiments, the method further includes: a file icon of the target file is displayed according to a pre-stored App icon of the first App.

Exemplarily, the file icon includes the App icon of the first App, so that the user may know the App that the file is created based on when viewing the file.

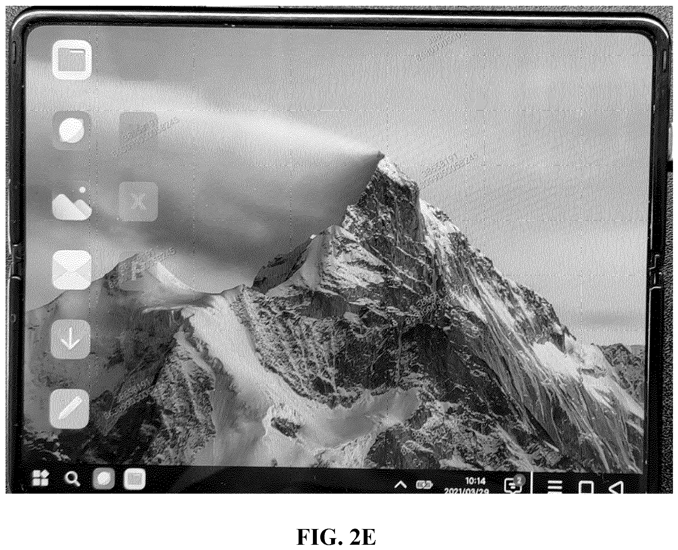

The PPT file illustrated in FIG. 2E is a PPT file that is created based on the dialog box illustrated in FIG. 2D when PPT software is not installed and that is displayed on the desktop.

Therefore, the App icon of the first App is stored at the same time of pre-storing the null file of the first App.

In some embodiments, the information processing method may be applied to a terminal device including a foldable screen. Exemplarily, the terminal device that executes the information processing method includes at least one foldable first screen, and the terminal device may run at least two operating systems. Therefore, the terminal device may also monitor a present posture of the first screen, and the terminal device is controlled according to the present posture of the first screen to run a first operating system or a second operating system.

The second operating system is different from the first operating system.

The first operating system and the second operating system are different operating systems. Exemplarily, a difference between the first operating system and the second operating system may be reflected by any one of the following aspects:
system kernels of the first operating system and the second operating system are different;
average resource consumptions for running of the first operating system and the second operating system are different; or
system interfaces of the first operating system and the second operating system are different. Some system interfaces are applicable to landscape devices, and some system interfaces are applicable to portrait devices. A typical device using a portrait mode more is a mobile phone, and a typical device using a landscape mode more may include a tablet computer and/or a PC.

Exemplarily, the first operating system may be a PC operating system that supports multiple tasks and multiple windows, and the second operating system may be a mobile phone operating system that does not support multiple tasks and multiple windows.

In another embodiment, the first operating system may be a mobile phone operating system that supports multiple tasks and multiple windows, and the second operating system may be a mobile phone operating system that does not support multiple tasks and multiple windows. A display mode of the mobile phone operating system that supports multiple tasks and multiple windows is like a display mode of the PC operating system that supports multiple tasks and multiple windows, and the system is adapted to a requirement of a mobile phone.

In some embodiments, a task bar and/or a menu bar may usually be displayed directly on a desktop on a system interface of the PC operating system. A system interface of the mobile phone operating system may be as illustrated in FIG. 2D, and the task bar and/or the menu bar may usually not be displayed on the desktop directly.

Exemplarily, the operation that the terminal device is controlled according to the present posture of the first screen to run the first operating system or the second operating system includes: the mobile device is controlled to run the first operating system responsive to that the first screen is in an unfolded posture; and/or, the mobile device is controlled to run the second operating system responsive to that the first screen is in a folded posture.

In the embodiment of the disclosure, the mobile device may at least run the first operating system and the second operating system, so that the mobile device may be controlled according to the posture, capable of reflecting a present user requirement, of the first screen to run the first operating system or the second operating system capable of meeting the present user requirement, so as to improve the operational performance of the mobile device and the user satisfaction. Furthermore, in the embodiment of the disclosure, the mobile device may be automatically controlled according to state information of the first screen to run the first operating system or the second operating system to implement adaptive processing for switching the operating systems to adjust the operational performance of the mobile device and the user satisfaction again.

In the embodiment of the disclosure, file creation for the first App that is deleted may be applied to a process that the terminal device runs the first operating system, and may also be applied to a process that the terminal device runs the second operating system.

In some embodiments, the method further includes: responsive to that the first screen is in the unfolded posture, the mobile device is controlled to be switched between the first operating system and the second operating system according to an operation instruction acting on the first screen.

When the first screen is in the unfolded posture, an operation interface is provided for the user to select the operating system. In some embodiments, the operation interface may be a displayed virtual control or a specific physical control provided by the mobile device. In some other embodiments, the operation interface may correspond to a certain operation of the user, for example, a touch operation acting on the first screen used as a touch screen and the like.

In summary, in the embodiment of the disclosure, if the first screen is in the unfolded posture, the mobile device may also be controlled to be switched between the first operating system and the second operating system according to the operation instruction acting on the first screen.

Exemplarily, in some embodiments, when the first screen is in the unfolded posture, the operating system run by the mobile device is the first operating system by default. However, in some cases, for example, the user is intended to use the second operating system, for example, entering the second operating system to query a specific file, the user may input the operation instruction acting on the first screen, and then the mobile device may switch the operating system presently in running.

In an embodiment, the operation instruction may be a switching instruction, and the switching instruction includes instructions that instruct the mobile device to switch the operating system. In view of this, exemplarily, the operation that the mobile device is controlled to be switched between the first operating system and the second operating system according to the operation instruction acting on the first screen responsive to that the first screen is in the unfolded posture includes at least one of the following:
responsive to that the first screen is in the unfolded posture and the mobile device presently runs the first operating system, a switching instruction acting on the first screen is detected, and the mobile device is controlled to be switched to the second operating system; or
responsive to that the first screen is in the unfolded posture and the mobile device presently runs the second operating system, the switching instruction acting on the first screen is detected, and the mobile device is controlled to be switched to the first operating system.

In some embodiments, the operation instruction includes instructions that instruct the mobile device to enter the corresponding operating system. In view of this, if the detected operation instruction is a first instruction that instructs the first operating system to be entered, the mobile device is controlled according to the first instruction to run the first operating system under the condition that the first screen is in the unfolded posture. If the detected operation instruction is a second instruction that instructs the second operating system to be entered, the mobile device is controlled according to the second instruction to run the second operating system under the condition that a second screen is in the unfolded posture.

In some embodiments, the method may further include:
responsive to detecting a first icon processing operation acting on a desktop displayed by the terminal device, it is determined whether an icon vacancy exists between icons displayed on the desktop after the first icon processing operation is executed; and
if it is detected that the icon vacancy exists, a second icon processing operation of eliminating the icon vacancy is executed after the first icon processing operation is executed.

Exemplarily, the operation that the second icon processing operation of eliminating the icon vacancy is executed after the first icon processing operation is executed if it is detected that the icon vacancy exists includes at least one of the following:
if it is detected that the icon vacancy exists, a rearrangement operation is performed on the icons displayed on the desktop after the first icon processing operation is executed, the icon vacancy between the adjacent icons being eliminated after the icons on the desktop are rearranged; or
if it is detected that the icon vacancy exists, the icon vacancy is refilled with a preset icon after the first icon processing operation is executed.

Exemplarily, the operation that the second icon processing operation of eliminating the icon vacancy is executed after the first icon processing operation is executed if it is detected that the icon vacancy exists includes:
if it is detected that the icon vacancy exists, it is detected whether there is an input operation triggering icon vacancy elimination; and
responsive to detecting the input operation, the second icon processing operation of eliminating the icon vacancy is executed after the first icon processing operation is executed.

In some embodiments, the operation S130 may include: the null file is pasted to a position that the creation operation acts on, and the target file is generated at the position that the creation operation acts on. Meanwhile, a file icon of the null file is displayed.

The operation that the target file corresponding to the first App is created based on the read pre-stored null file includes: a file storage directory is determined according to a position that the creation operation acts on; and the target file corresponding to the first App is created under the file storage directory.

For example, if the creation operation is detected on the desktop, the file storage directory is determined as the desktop, and the target file is stored on the desktop.

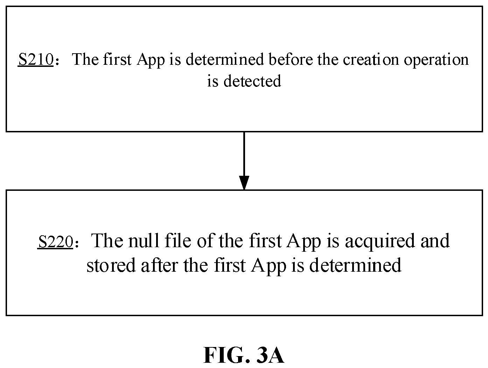

In some embodiments, as illustrated in FIG. 3A, the method further includes the following operations.

At S210, the first App is determined before the creation operation is detected.

At S220, the null file of the first App is acquired and stored after the first App is determined.

The first App is predetermined, and when the creation operation is detected, it may be determined rapidly whether the present creation operation requests for creating the file of the first App determined by the terminal device.

In some embodiments, when the null file is stored, the App icon of the first App is also stored.

In some embodiments, the operation S 120 may include: an installed App in the terminal device is detected, and an uninstalled App in a preset App list is determined as the first App according to the installed App; and
The operation S220 may include: the null file of the first App is downloaded and stored after the first App is determined.

The preset App list may be a list that is predetermined by a device manufacturer of the terminal device and includes identification information of Apps, and the list stores identification information of uninstalled Apps that are determined according to empirical values or historical creation records and corresponds to relatively high using frequencies in the terminal device.

For example, if it is detected that office software is not installed in a PC operating system run by a foldable device including a foldable screen and the office software is in the preset App list, the office software is determined as the first App.

If an App that has never been installed in the terminal device is the first App, the terminal device may search for and download the App icon of the first App from a network side, and acquire the null file. If the null file is not downloaded from the network, a non-null file may be downloaded and edited into a null file.

When the null file of the first App is stored, the App icon of the first App may also be downloaded and stored.

In another embodiment, the operation S210 may include: an App that the mobile device is uninstalling is determined as the first App; and the operation S220 may include: the null file of the first App is created based on the first App before the first App is uninstalled, and the null file of the first App is stored.

In the embodiment of the disclosure, if an App installed in the terminal device is uninstalled, the uninstalled App may directly be determined as the first App.

In the embodiment of the disclosure, before the first App is uninstalled, the null file of the first App may be created and stored, and the App icon of the first App may also be stored.

In some other cases, the operation S210 may be as follows: if the mobile device is uninstalling an App of which an App identifier is in the preset App list, the App that is being uninstalled is determined as the first App. Before the first App is uninstalled, the null file is created and stored. Therefore, the App icon and null file of the first App do not need to be downloaded from the network.

App identifiers in the preset App list only include App identifiers of Apps that allow the user to edit files, and files editable for the user may not be created for Apps such as a game App, a shopping App, a payment App, or the like.

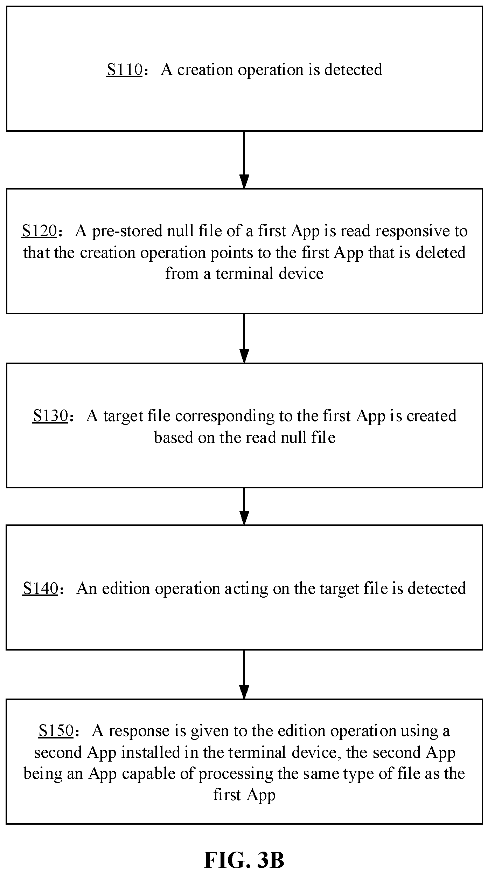

In some embodiments, as illustrated in FIG. 3B, the method further includes the following operations.

At S 140, an edition operation acting on the target file is detected.

At S150, a response is given to the edition operation using a second App installed in the terminal device, the second App being an App capable of processing the same type of file as the first App.

If creating a target file that should be created for an App presently deleted from the terminal device, the user is very likely to edit the target file.

In the embodiment of the disclosure, the response is given to the edition operation through another App supporting edition of the file provided by the first App, so that the file of the first App may be edited under the condition that the first App is deleted.

Exemplarily, after the target file is created based on the null file of the first App, if a file operation of opening the target file is detected, the target file is opened using the second App; and after the edition operation over a content of the target file is detected, the response is given to the edition operation using the second App to edit the target file, thereby implementing edition of the target file. After edition, an original file header and file format of the target file may be kept unchanged, namely the target file is kept as a file of the first App.

Exemplarily, the first App may be word, and the second App may be WPS. If word may not or cannot be installed in some terminal devices due to problems about authorization and the like. but the users are intended to use word habitually, the solution provided in the embodiment of the disclosure may be used, a word file may still be created, but a response is given using WPS when responding to an edition operation of the user over the word file. After the response is given to the edition operation, the edited file is still stored as a word file rather than a WPS file according to a file header provided by the null file and the like. In summary, in the embodiment of the disclosure, after the target file corresponding to the first App is edited using the second App, the target file is still stored according to the file header and file format provided by the first App, and is just added with the content.

In some embodiments, the edition operation includes at least one of a file name edition operation, a file content edition operation, or a file operation; and the file operation includes a file deletion operation, a file copying operation, a file pasting operation, and a file trimming operation.

The name of a file may be set and/or modified through the file name edition operation.

The file content edition operation refers to an edition operation over the file after the file is opened.

The file operation may be a processing operation over the whole file, such as the file deletion operation, the file copying operation, the file pasting operation, the file trimming operation, and the like. With adoption of the method provided in the embodiment of the disclosure, file creation and/or any file edition operation may be performed on the first App when the first App is deleted but the second App capable of editing the target file created based on the first App exists.

In some embodiments, the method further includes: an installation prompt of installing the first App, the second App, or the first App and the second App is displayed responsive to that the second App capable of editing the target file is not installed in the terminal device; and the installation prompt includes a downloading entry for acquiring an installation package of the first App, the second App, or the first App and the second App.

If both the first App and the second App are deleted from the terminal device, no App capable of editing the first App may not be stored in the terminal device, and in such case, the installation prompt may be popped up.

The downloading entry may be various links or interfaces linked to a server that provides the package of the first App and/or the second App for downloading.

Providing the downloading entry for the first App or the second App is specifically determined according to a right of the terminal. Specifically, for example, the installation prompt includes a downloading entry for an App that the terminal has a right to download or install, or includes a downloading entry for an App that the terminal device may download and install for free.

In some embodiments, the method further includes: the corresponding App is downloaded if an installation confirmation operation acting on the installation prompt is detected; and the response is given to the edition operation based on the downloaded App.

In some embodiments, the method further includes: responsive to that the terminal device is connected to a server, the edition operation is sent to the server when the second App is not installed in the terminal device; the server responds to the edition operation after the edition operation is sent to the server; and the target file edited by the server is received, and the received target file is displayed on the terminal device. In such a manner, the file is edited remotely based on the server under the condition that the first App and the second App are deleted.

In some embodiments, file creation normally refers to creating a new file using a file App. The defect is that this function does not work if the file App does not exist. In the embodiment of the disclosure, some null files are cached, and are directly copied and pasted during creation. For edition, the user may select another App capable of editing the null file according to the preference to edit the file. For example, the word file is edited using WPS.

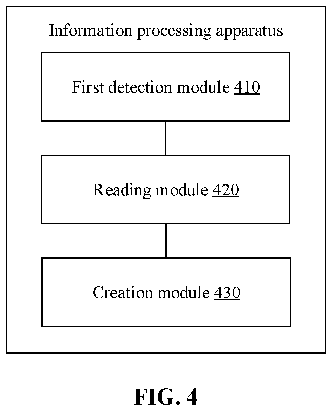

As illustrated in FIG. 4, an embodiment of the disclosure provides an information processing apparatus, which is applied to UE and includes a first detection module 410, a reading module 420 and a creation module 430.

The first detection module 410 is configured to detect a creation operation on a terminal device.

The reading module 420 is configured to read a pre-stored null file of a first App responsive to that the creation operation points to the first App deleted from the terminal device.

The creation module 430 is configured to create a target file corresponding to the first App based on the read pre-stored null file.

In some embodiments, all the first detection module 410, the reading module 420, and the creation module 430 are program modules. After the program modules are executed by a processor, a file of the first App that is deleted from the terminal device may be created.

In some other embodiments, all the first detection module 410, the reading module 420, and the creation module 430 may be combined software and hardware modules. The combined software and hardware modules may include various programmable arrays. The programmable arrays include, but are not limited to, a complex programmable array and/or a field programmable array.

In some other embodiments, all the first detection module 410, the reading module 420, and the creation module 430 may be pure hardware modules. The pure hardware module includes, but is not limited to, an application specific integrated circuit (ASIC).

In some embodiments, the creation module 430 is specifically configured to determine a file storage directory according to a position that the creation operation acts on, and create the target file corresponding to the first App under the file storage directory.

In some embodiments, the apparatus further includes a determination module and an acquisition and storage module.

The determination module is configured to determine the first App before the creation operation is detected.

The acquisition and storage module is configured to acquire and store the null file of the first App after the first App is determined.

In some embodiments, the determination module is specifically configured to detect an installed App in the terminal device and determine an uninstalled App in a preset App list as the first App according to the installed App; and the acquisition and storage module is specifically configured to download and store the null file of the first App after the first App is determined.

In some embodiments, the determination module is specifically configured to determine an App that the mobile device is uninstalling as the first App; and the acquisition and storage module is specifically configured to create the null file of the first App based on the first App before the first App is uninstalled, and store the null file of the first App.

In some embodiments, the apparatus further includes a second detection module and an edition module.

The second detection module is configured to detect an edition operation acting on the target file.

The edition module is configured to respond to the edition operation using a second App installed in the terminal device; and the second App is an App capable of processing the same type of file as the first App.

In some embodiments, the edition operation includes at least one of a file name edition operation, a file content edition operation or a file operation; and the file operation includes a file deletion operation, a file copying operation, a file pasting operation, and a file trimming operation.

In some embodiments, the apparatus further includes: a prompting module, configured to display an installation prompt of installing the first App, the second App, or the first App and the second App responsive to that the second App capable of editing the target file is not installed in the terminal device; and the installation prompt includes a downloading entry for acquiring an installation package of the first App, the second App, or the first App and the second App.

In some embodiments, the apparatus further includes: a display module, configured to display a file icon of the target file according to a pre-stored App icon of the first App.

An embodiment of the disclosure provides a terminal device, which includes: a memory configured to store instructions executable by a processor; and the processor, coupled to the memory. The processor is configured to execute the information processing method provided in any abovementioned technical solution.

The memory may include various types of storage media, and the storage medium is a non-transitory computer storage medium, and may keep information in a communication device after a power failure of the communication device.

The processor may be coupled to the memory through a bus and the like, and is configured to read an executable program stored in the memory to implement, for example, at least one of any methods illustrated in FIG. 1 to FIG. 3B.

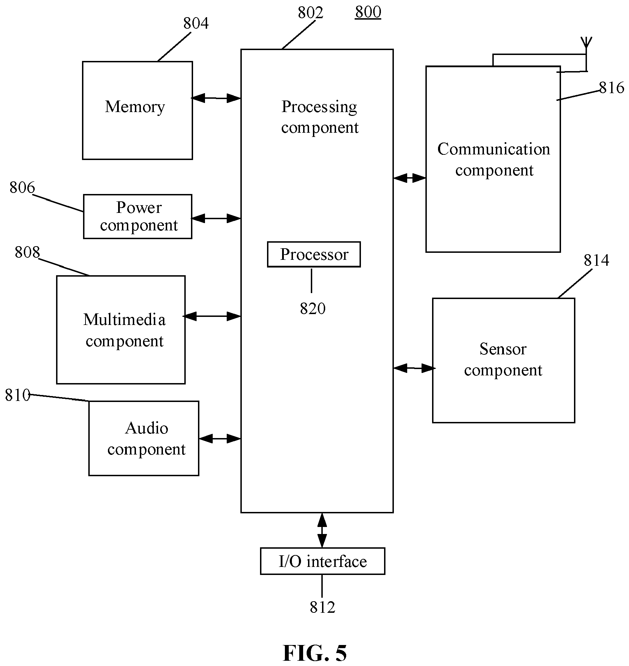

FIG. 5 is a block diagram of a UE 800, according to an exemplary embodiment. For example, the UE 800 may be included in a terminal device such as a mobile phone and a mobile computer or a device such as a server. In a word, the UE 800 for data processing may be included in any communication device.

Referring to FIG. 5, the UE 800 may include one or more of the following components: a processing component 802, a memory 804, a power component 806, a multimedia component 808, an audio component 810, an input/output (I/O) interface 812, a sensor component 814, or a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the abovementioned method. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the UE 800. Examples of such data include instructions for any Apps or methods operated on the UE 800, contact data, phonebook data, messages, pictures, video, etc. The memory 804 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 806 provides power for various components of the UE 800. The power component 806 may include a power management system, one or more power supplies, and other components associated with generation, management and distribution of power for the UE 800.

The multimedia component 808 includes a screen providing an output interface between the UE 800 and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a period of time and a pressure associated with the touch or swipe action. In some embodiments, the multimedia component 808 includes a front camera and/or a rear camera. The front camera and/or the rear camera may receive external multimedia data when the UE 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a microphone (MIC), and the MIC is configured to receive an external audio signal when the UE 800 is in an operation mode, such as a call mode, a recording mode, and a voice recognition mode. The received audio signal may further be stored in the memory 804 or sent through the communication component 816. In some embodiments, the audio component 810 further includes a speaker configured to output the audio signal.

The I/O interface 812 provides an interface between the processing component 802 and peripheral interface modules, such as a keyboard, a click wheel, buttons and the like. The buttons may include, but are not limited to: a home button, a volume button, a starting button and a locking button.

The sensor component 814 includes one or more sensors configured to provide status assessments in various aspects for the UE 800. For instance, the sensor component 814 may detect an on/off status of the UE 800 and relative positioning of components, such as a display and small keyboard of the UE 800, and the sensor component 814 may further detect a change in a position of the UE 800 or a component of the UE 800, presence or absence of contact between the user and the UE 800, orientation or acceleration/deceleration of the UE 800 and a change in temperature of the UE 800. The sensor component 814 may include a proximity sensor configured to detect presence of an object nearby without any physical contact. The sensor component 814 may also include a light sensor, such as a complementary metal oxide semiconductor (CMOS) or charge coupled device (CCD) image sensor, configured for use in an imaging App. In some embodiments, the sensor component 814 may also include an acceleration sensor, a gyroscope sensor, a magnetic sensor, a pressure sensor or a temperature sensor.

The communication component 816 is configured to facilitate wired or wireless communication between the UE 800 and other devices. The UE 800 may access a communication-standard-based wireless network, such as a wireless fidelity (WiFi) network, a 2nd-generation (2G) or 3rd-generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In an exemplary embodiment, the UE 800 may be implemented by one or more ASICs, digital signal processors (DSPs), digital signal processing devices (DSPDs), programmable logic devices (PLDs), field programmable gate arrays (FPGAs), controllers, micro-controllers, microprocessors or other electronic components, and is configured to execute the abovementioned methods.

In an exemplary embodiment, there is also provided a non-transitory computer-readable storage medium including instructions, such as included in the memory 804, executable by the processor 820 of the device 800 for performing the abovementioned methods. For example, the non-transitory computer-readable storage medium may be a ROM, a random access memory (RAM), a compact disc read-only memory (CD-ROM), a magnetic tape, a floppy disc, an optical data storage device, and the like.

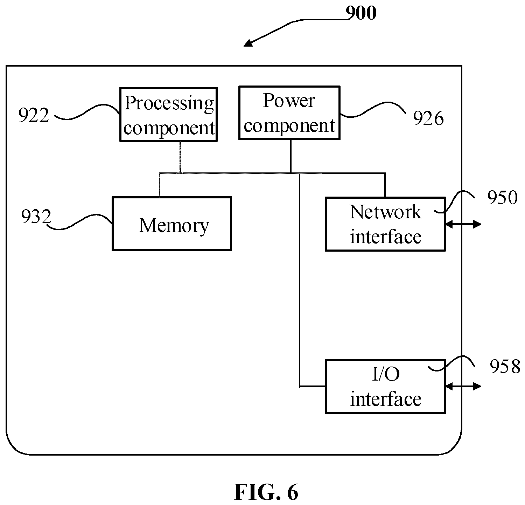

Referring to FIG. 6, a base station 900 includes a processing component 922, further including one or more processors, and a memory resource represented by a memory 932, configured to store instructions executable by the processing component 922, for example, an App. The App stored in the memory 932 may include one or more than one module of which each corresponds to a set of instructions. In addition, the processing component 922 is configured to execute the instructions to execute any method applied to an access device in the abovementioned methods, for example, the methods illustrated in FIG. 1 to FIG. 3B.

The base station 900 may further include a power component 926 configured to execute power management of the base station 900, a wired or wireless network interface 950 configured to connect the base station 900 to a network, and an I/O interface 958. The base station 900 may be operated based on an operating system stored in the memory 932, for example, Windows Server TM, Mac OS XTM, UnixTM, LinuxTM, FreeBSDTM, or the like.

An embodiment of the disclosure provides a non-transitory computer-readable storage medium. When instructions in the storage medium are executed by a processor of UE, the UE or a base station may execute an information processing method provided in any abovementioned embodiment, and may execute at least one of any method illustrated in FIG. 1 and/or FIG. 3.

The information processing method may be an information processing method executed by the UE. The method includes: a creation operation is detected on a terminal device; a pre-stored null file of a first App is read responsive to that the creation operation points to the first App deleted from the terminal device; and a target file corresponding to the first App is created based on the read pre-stored null file.

It can be understood that the operation that the target file corresponding to the first App is created based on the read pre-stored null file includes: a file storage directory is determined according to a position that the creation operation acts on; and the target file corresponding to the first App is created under the file storage directory.

It can be understood that the method further includes: the first App is determined before the creation operation is detected; and the null file of the first App is acquired and stored after the first App is determined.

It can be understood that the operation that the first App is determined includes: an installed App in the terminal device is detected, and an uninstalled App in a preset App list is determined as the first App according to the installed App; and the operation that the null file of the first App is acquired and stored after the first App is determined includes: the null file of the first App is downloaded and stored after the first App is determined.

It can be understood that the operation that the first App is determined includes: an App that the mobile device is uninstalling is determined as the first App; and the operation that the null file of the first App is acquired and stored after the first App is determined includes: the null file of the first App is created based on the first App before the first App is uninstalled, and the null file of the first App is stored.

It can be understood that the method further includes: an edition operation acting on the target file is detected; and a response is given to the edition operation using a second App installed in the terminal device, the second App being an App capable of processing the same type of file as the first App.

It can be understood that the edition operation includes at least one of: a file name edition operation, a file content edition operation, or a file operation; and the file operation includes a file deletion operation, a file copying operation, a file pasting operation, and a file trimming operation.

It can be understood that the method further includes: an installation prompt of installing the first App, the second App, or the first App and the second App is displayed responsive to that the second App capable of editing the target file is not installed in the terminal device; and the installation prompt includes a downloading entry for acquiring an installation package of the first App, the second App, or the first App and the second App.

Based on the above solution, the method further includes: a file icon of the target file is displayed according to a pre-stored App icon of the first App.

Other embodiments of the disclosure will be apparent to those skilled in the art from consideration of the specification and practice of the disclosure disclosed here. It is intended that the specification and examples be considered as exemplary only, with a true scope of the invention being indicated by the following claims.

## Claims

1. An information processing method, **characterized in that** the method comprises:
detecting (S110) a creation operation acting on an application, App, icon of a first App on a terminal device;
reading (S120) a pre-stored null file of the first App responsive to that the creation operation points to the first App deleted from the terminal device; wherein the null file is created, and after the null file is opened, there is no content that has been edited; and
creating (S130) a target file corresponding to the first App based on the read pre-stored null file;
further comprising:
storing information indicating a corresponding relationship between the App icon of the first App and the null file; and
determining a storage address of the null file based on the corresponding relationship to read the null file from the storage address.

2. The method of claim 1, wherein the creating the target file corresponding to the first App based on the read pre-stored null file comprises:
determining a file storage directory according to a position that the creation operation acts on; and
creating the target file corresponding to the first App under the file storage directory.

3. The method of claim 1 or 2, further comprising:
determining (S210) the first App before the creation operation is detected; and
acquiring (S220) and storing the null file of the first App after the first App is determined;
wherein the determining the first App (S210) comprises: detecting an installed App in the terminal device, and determining an uninstalled App in a preset App list as the first App according to the installed App; and wherein the acquiring and storing the null file of the first App after the first App is determined (S220) comprises: downloading and storing the null file of the first App after the first App is determined; or
wherein the determining the first App (S210) comprises: determining an App that the mobile device is uninstalling as the first App; and wherein the acquiring and storing the null file of the first App after the first App is determined (S220) comprises: creating the null file of the first App based on the first App before the first App is downloaded uninstalled, and storing the null file of the first App.

4. The method of claim 1 or 2, further comprising:
detecting an edition operation acting on the target file; and
responding to the edition operation using a second App installed in the terminal device, the second App being an App capable of processing a same type of file as the first App.

5. The method of claim 4, wherein the edition operation comprises at least one of: a file name edition operation, a file content edition operation or a file operation; wherein the file operation comprises a file deletion operation, a file copying operation, a file pasting operation, and a file trimming operation.

6. The method of claim 4 or 5, further comprising:
displaying an installation prompt of installing the first App, the second App, or the first App and the second App responsive to that the second App capable of editing the target file is not installed in the terminal device, the installation prompt including a downloading entry for acquiring an installation package of the first App, the second App, or the first App and the second App.

7. The method of any one of the preceding claims, further comprising:
displaying a file icon of the target file according to a pre-stored App icon of the first App.

8. An information processing apparatus, **characterized in that** the apparatus comprises:
a first detection module (410), configured to detect a creation operation acting on an application, App, icon of a first App on a terminal device;
a reading module (420), configured to read a pre-stored null file of the first App responsive to that the creation operation points to the first App deleted from the terminal device; wherein the null file is created, and after the null file is opened, there is no content that has been edited; and
a creation module (430), configured to create a target file corresponding to the first App based on the read pre-stored null file;
further comprising a processor configured to:
store information indicating a corresponding relationship between the App icon of the first App and the null file; and
determine a storage address of the null file based on the corresponding relationship to read the null file from the storage address.

9. The apparatus of claim 8, wherein the creation module (430) is further configured to determine a file storage directory according to a position that the creation operation acts on, and create the target file corresponding to the first App under the file storage directory.

10. The apparatus of claim 8 or 9, further comprising:
a determination module, configured to determine the first App before the creation operation is detected; and
an acquisition and storage module, configured to acquire and store the null file of the first App after the first App is determined;
wherein the determination module is further configured to detect an installed App in the terminal device and determine an uninstalled App in a preset App list as the first App according to the installed App; and the acquisition and storage module is further configured to download and store the null file of the first App after the first App is determined; or
wherein the determination module is further configured to determine an App that the mobile device is uninstalling as the first App; and the acquisition and storage module is further configured to create the null file of the first App based on the first App before the first App is uninstalled, and store the null file of the first App.

11. The apparatus of 8 or 9, further comprising:
a second detection module, configured to detect an edition operation acting on the target file; and
an edition module, configured to respond to the edition operation using a second App installed in the terminal device, the second App being an App capable of processing a same type of file as the first App.

12. The apparatus of claim 11, wherein the edition operation comprises at least one of a file name edition operation, a file content edition operation or a file operation; wherein the file operation comprises a file deletion operation, a file copying operation, a file pasting operation, and a file trimming operation.

13. The apparatus of claim 11 or 12, further comprising:
a prompting module, configured to display an installation prompt of installing the first App, the second App, or the first App and the second App responsive to that the second App capable of editing the target file is not installed in the terminal device, the installation prompt including a downloading entry for acquiring an installation package of the first App, the second App, or the first App and the second App.

14. The apparatus of any one of claims 8 - 13, further comprising:
a display module, configured to display a file icon of the target file according to a pre-stored App icon of the first App.

15. A computer-readable storage medium, instructions in the storage medium being executed by a processor of a computer to cause the computer to execute the information processing method of any one of claims 1 to 7.

## Patentansprüche

1. Ein Informationsverarbeitungsverfahren, **dadurch gekennzeichnet, dass** das Verfahren umfasst:
Erfassen (S110) eines Erstellungsvorgangs, der auf das Icon einer Anwendung, App, einer ersten App auf einem Endgerät wirkt;
Lesen (S120) einer vorgespeicherten Null-Datei der ersten App als Reaktion darauf, dass der Erstellungsvorgang auf die erste App verweist, die von der terminalen Vorrichtung gelöscht wurde; wobei die Null-Datei erstellt wird, und nachdem die Null-Datei geöffnet wurde, kein Inhalt vorhanden ist, der bearbeitet wurde;und
Erstellen (S130) einer Zieldatei, die der ersten App entspricht, auf der Grundlage der gelesenen, vorgespeicherten Null-Datei;
weiter umfassend:
Speichern von Informationen, die eine entsprechende Beziehung zwischen dem App-Icon der ersten App und der Null-Datei anzeigen; und
Bestimmen einer Speicheradresse der Null-Datei auf der Grundlage der entsprechenden Beziehung zum Lesen der Null-Datei von der Speicheradresse.

2. Verfahren nach Anspruch 1, wobei das Erzeugen der Zieldatei, die der ersten App entspricht, basierend auf der gelesenen vorgespeicherten Null-Datei umfasst:
Bestimmen eines Dateispeicherverzeichnisses entsprechend einer Position, auf die die Erstellungsoperation wirkt; und
Erstellung der Zieldatei, die der ersten App im Dateispeicherverzeichnis entspricht.

3. Das Verfahren nach Anspruch 1 oder 2 ferner umfassend:
Bestimmen (S210) der ersten App, bevor der Erstellungsvorgang erkannt wird; und
Erfassen (S220) und Speichern der Null-Datei der ersten App, nachdem die erste App ermittelt wurde;
wobei das Bestimmen der ersten App (S210) umfasst: Erfassen einer installierten App in dem Endgerät und Bestimmen einer nicht installierten App in einer voreingestellten App-Liste als die erste App gemäß der installierten App; und wobei das Erfassen und Speichern der Null-Datei der ersten App, nachdem die erste App bestimmt ist (S220), umfasst: Herunterladen und Speichern der Null-Datei der ersten App, nachdem die erste App bestimmt ist; oder
wobei das Bestimmen der ersten App (S210) umfasst: Bestimmen einer App, die das Mobilgerät deinstalliert, als die erste App; und wobei das Erfassen und Speichern der Null-Datei der ersten App, nachdem die erste App bestimmt ist (S220), umfasst: Erzeugen der Null-Datei der ersten App auf der Grundlage der ersten App, bevor die erste App heruntergeladen und deinstalliert wird, und Speichern der Null-Datei der ersten App.

4. Verfahren nach Anspruch 1 oder 2 ferner umfassend:
Erkennen einer Editionsoperation, die auf die Zieldatei wirkt; und
Reagieren auf die Ausgabeoperation mit einer zweiten App, die auf dem Endgerät installiert ist, wobei die zweite App eine App ist, die in der Lage ist, denselben Dateityp wie die erste App zu verarbeiten.

5. Verfahren nach Anspruch 4, wobei die Editionsoperation mindestens einen der folgenden Vorgänge umfasst: einen Dateinamen-Editionsvorgang, einen Dateiinhalt-Editionsvorgang oder einen Dateivorgang; wobei der Dateivorgang einen Dateilöschvorgang, einen Dateikopiervorgang, einen Dateieinfügevorgang und einen Dateischneidevorgang umfasst.

6. Das Verfahren nach Anspruch 4 oder 5 ferner umfassend:
Anzeigen einer Installationsaufforderung zum Installieren der ersten App, der zweiten App oder der ersten App und der zweiten App als Reaktion darauf, dass die zweite App, die die Zieldatei bearbeiten kann, nicht in dem Endgerät installiert ist, wobei die Installationsaufforderung einen Eintrag zum Herunterladen enthält, um ein Installationspaket der ersten App, der zweiten App oder der ersten App und der zweiten App zu erwerben.

7. Verfahren nach einem der vorangegangenen Ansprüche ferner umfassend:
Anzeige eines Dateiicons der Zieldatei entsprechend einem zuvor gespeicherten App-Icon der ersten App.

8. Informationsverarbeitungsvorrichtung, **dadurch gekennzeichnet, dass** die Vorrichtung umfasst:
ein erstes Erkennungsmodul (410), das so konfiguriert ist, dass es einen Erstellungsvorgang erkennt, der auf ein Icon einer Anwendung, App, einer ersten App auf einem Endgerät wirkt;
ein Lesemodul (420), das so konfiguriert ist, dass es eine vorab gespeicherte Null-Datei der ersten App in Reaktion darauf liest, dass der Erstellungsvorgang auf die von der Endvorrichtung gelöschte erste App verweist; wobei die Null-Datei erstellt wird und nach dem Öffnen der Null-Datei kein Inhalt vorhanden ist, der bearbeitet wurde; und
ein Erstellungsmodul (430), das so konfiguriert ist, dass es eine der ersten App entsprechende Zieldatei auf der Grundlage der gelesenen, vorab gespeicherten Null-Datei erstellt;
ferner einen Prozessor umfasst, der so konfiguriert ist, dass er:
Informationen speichert, die eine entsprechende Beziehung zwischen dem App-Icon der ersten App und der Null-Datei anzeigen; und
eine Speicheradresse der Null-Datei bestimmt auf der Grundlage der entsprechenden Beziehung, um die Null-Datei von der Speicheradresse zu lesen.

9. Vorrichtung nach Anspruch 8, wobei das Erstellungsmodul (430) ferner so konfiguriert ist, dass es ein Dateispeicherverzeichnis entsprechend einer Position bestimmt, auf die der Erstellungsvorgang wirkt, und die Zieldatei entsprechend der ersten App unter dem Dateispeicherverzeichnis erstellt.

10. Vorrichtung nach Anspruch 8 oder 9, ferner umfassend:
ein Bestimmungsmodul, das so konfiguriert ist, dass es die erste App bestimmt, bevor der Erstellungsvorgang erkannt wird; und
ein Erfassungs- und Speichermodul, das so konfiguriert ist, dass es die Null-Datei der ersten App erfasst und speichert, nachdem die erste App bestimmt wurde;
wobei das Bestimmungsmodul ferner so konfiguriert ist, dass es eine installierte App in dem Endgerät erfasst und eine nicht installierte App in einer voreingestellten App-Liste als die erste App gemäß der installierten App bestimmt; und das Erfassungs- und Speichermodul ferner so konfiguriert ist, dass es die Null-Datei der ersten App herunterlädt und speichert, nachdem die erste App bestimmt wurde; oder
wobei das Bestimmungsmodul ferner so konfiguriert ist, dass es eine App, die das mobile Gerät deinstalliert, als die erste App bestimmt; und das Erfassungs- und Speichermodul ferner so konfiguriert ist, dass es die Null-Datei der ersten App auf der Grundlage der ersten App erstellt, bevor die erste App deinstalliert wird, und die Null-Datei der ersten App speichert.

11. Vorrichtung nach Anspruch 8 oder 9, die außerdem Folgendes umfasst:
ein zweites Erkennungsmodul, das so konfiguriert ist, dass es eine auf die Zieldatei wirkende Editionsoperation erkennt; und
ein Editionsmodul, das so konfiguriert ist, dass es auf die Editionsoperation mit einer zweiten App reagiert, die auf dem Endgerät installiert ist, wobei die zweite App eine App ist, die in der Lage ist, denselben Dateityp zu verarbeiten wie die erste App.

12. Vorrichtung nach Anspruch 11, wobei die Editionsoperation mindestens eine der folgenden Operationen umfasst: eine Dateinamen-Editionsoperation, eine Dateiinhalts-Editionsoperation oder eine Datei-Operation; wobei die Datei-Operation eine Dateilöschoperation, eine Dateikopieroperation, eine Dateieinfügeoperation und eine Dateischneideoperation umfasst.

13. Vorrichtung nach Anspruch 11 oder 12 ferner umfassend:
ein Aufforderungsmodul, das so konfiguriert ist, dass es eine Installationsaufforderung zum Installieren der ersten App, der zweiten App oder der ersten App und der zweiten App in Reaktion darauf anzeigt, dass die zweite App, die die Zieldatei bearbeiten kann, nicht in dem Endgerät installiert ist, wobei die Installationsaufforderung einen Eintrag zum Herunterladen enthält, um ein Installationspaket der ersten App, der zweiten App oder der ersten App und der zweiten App zu erwerben.

14. Vorrichtung nach einem der Ansprüche 8 bis 13, die außerdem Folgendes umfasst:
ein Anzeigemodul, das so konfiguriert ist, dass es ein Datei-Icon der Zieldatei in Übereinstimmung mit einem zuvor gespeicherten App-Icon der ersten App anzeigt.

15. Computerlesbares Speichermedium, wobei Anweisungen in dem Speichermedium von einem Prozessor eines Computers ausgeführt werden, um den Computer zu veranlassen, das Informationsverarbeitungsverfahren nach einem der Ansprüche 1 bis 7 auszuführen.

## Revendications

1. Méthode de traitement de l'information, **caractérisée par le fait que** la méthode comprend :
détecter (S110) une opération de création agissant sur une application, App, icône d'une première App sur un terminal ;
lire (S 120) un fichier nul préenregistré de la première application parce que l'opération de création indique que la première application a été supprimée du dispositif terminal ; dans ce cas, le fichier nul est créé et, après son ouverture, aucun contenu n'a été édité ; et
création (S130) d'un fichier cible correspondant à la première application sur la base du fichier nul préenregistré lu ;
comprenant en outre
stocker des informations indiquant une relation de correspondance entre l'icône de la première application et le fichier nul ; et
déterminer une adresse de stockage du fichier nul sur la base de la relation correspondante pour lire le fichier nul à partir de l'adresse de stockage.

2. La méthode de la revendication 1, dans laquelle la création du fichier cible correspondant à la première application sur la base du fichier nul préenregistré comprend :
déterminer un répertoire de stockage de fichiers en fonction d'une position sur laquelle agit l'opération de création ; et
créer le fichier cible correspondant à la première App dans le répertoire de stockage des fichiers.

3. La méthode de la revendication 1 ou 2, comprenant en outre :
déterminer (S210) la première App avant que l'opération de création ne soit détectée ; et
acquérir (S220) et stocker le fichier nul de la première application après que la première application a été déterminée ;
dans laquelle la détermination de la première application (S210) comprend : la détection d'une application installée dans le dispositif terminal et la détermination d'une application non installée dans une liste d'applications prédéfinie en tant que première application en fonction de l'application installée ; et dans laquelle l'acquisition et le stockage du fichier nul de la première application après la détermination de la première application (S220) comprennent : le téléchargement et le stockage du fichier nul de la première application après la détermination de la première application ; ou
dans lequel la détermination de la première application (S210) comprend : la détermination d'une application que le dispositif mobile désinstalle en tant que première application ; et dans lequel l'acquisition et le stockage du fichier nul de la première application après la détermination de la première application (S220) comprend : la création du fichier nul de la première application sur la base de la première application avant que la première application ne soit téléchargée et désinstallée, et le stockage du fichier nul de la première application.

4. La méthode de la revendication 1 ou 2, comprenant en outre :
détection d'une opération d'édition agissant sur le fichier cible ; et
répondre à l'opération d'édition à l'aide d'une deuxième application installée dans le terminal, la deuxième application étant une application capable de traiter le même type de fichier que la première application.

5. La méthode de la revendication 4, dans laquelle l'opération d'édition comprend au moins l'une des opérations suivantes : une opération d'édition de nom de fichier, une opération d'édition de contenu de fichier ou une opération de fichier ; dans laquelle l'opération de fichier comprend une opération de suppression de fichier, une opération de copie de fichier, une opération de collage de fichier et une opération de découpage de fichier.

6. La méthode de la revendication 4 ou 5, comprenant en outre :
afficher une invite d'installation de la première application, de la deuxième application, ou de la première application et de la deuxième application si la deuxième application capable de modifier le fichier cible n'est pas installée sur le terminal, l'invite d'installation comprenant une entrée de téléchargement pour l'acquisition d'un paquet d'installation de la première application, de la deuxième application, ou de la première application et de la deuxième application.

7. La méthode de l'une des revendications précédentes, comprenant en outre :
afficher une icône de fichier du fichier cible en fonction d'une icône d'application préenregistrée de la première application.

8. Appareil de traitement de l'information, **caractérisé par le fait que** l'appareil comprend :
un premier module de détection (410), configuré pour détecter une opération de création agissant sur une application, App, icône d'une première App sur un terminal ;
un module de lecture (420), configuré pour lire un fichier nul préenregistré de la première application en réponse au fait que l'opération de création indique que la première application a été supprimée de l'appareil terminal ; dans ce cas, le fichier nul est créé et, après l'ouverture du fichier nul, il n'y a pas de contenu qui a été modifié ; et
un module de création (430), configuré pour créer un fichier cible correspondant à la première application sur la base du fichier nul préenregistré lu ;
comprenant en outre un processeur configuré pour :
stocker des informations indiquant une relation de correspondance entre l'icône de la première application et le fichier nul ; et
déterminer une adresse de stockage du fichier nul sur la base de la relation correspondante pour lire le fichier nul à partir de l'adresse de stockage.

9. L'appareil de la revendication 8, dans lequel le module de création (430) est en outre configuré pour déterminer un répertoire de stockage de fichiers en fonction d'une position sur laquelle l'opération de création agit, et créer le fichier cible correspondant à la première application sous le répertoire de stockage de fichiers.

10. L'appareil de la revendication 8 ou 9, comprenant en outre :
un module de détermination, configuré pour déterminer la première application avant que l'opération de création ne soit détectée ; et
un module d'acquisition et de stockage, configuré pour acquérir et stocker le fichier nul de la première application après que celle-ci a été déterminée ;
le module de détermination est en outre configuré pour détecter une application installée sur le terminal et déterminer une application non installée dans une liste d'applications prédéfinie comme étant la première application en fonction de l'application installée ; le module d'acquisition et de stockage est en outre configuré pour télécharger et stocker le fichier nul de la première application une fois que la première application a été déterminée ; ou
Le module d'acquisition et de stockage est en outre configuré pour créer le fichier nul de la première application sur la base de la première application avant que celle-ci ne soit désinstallée, et pour stocker le fichier nul de la première application.

11. L'appareil de la revendication 8 ou 9, comprenant en outre :
un second module de détection, configuré pour détecter une opération d'édition agissant sur le fichier cible ; et
un module d'édition, configuré pour répondre à l'opération d'édition à l'aide d'une seconde application installée sur le terminal, la seconde application étant une application capable de traiter le même type de fichier que la première application.

12. L'appareil de la revendication 11, dans lequel l'opération d'édition comprend au moins l'une des opérations suivantes : une opération d'édition de nom de fichier, une opération d'édition de contenu de fichier ou une opération de fichier ; dans lequel l'opération de fichier comprend une opération de suppression de fichier, une opération de copie de fichier, une opération de collage de fichier et une opération de découpage de fichier.

13. L'appareil de la revendication 11 ou 12, comprenant en outre :
un module d'invite, configuré pour afficher une invite d'installation de la première application, de la seconde application, ou de la première application et de la seconde application en réponse au fait que la seconde application capable d'éditer le fichier cible n'est pas installée sur le terminal, l'invite d'installation comprenant une entrée de téléchargement pour acquérir un paquet d'installation de la première application, de la seconde application, ou de la première application et de la seconde application.

14. L'appareil de l'une des revendications 8 à 13, comprenant en outre :
un module d'affichage, configuré pour afficher une icône de fichier du fichier cible en fonction d'une icône d'application préenregistrée de la première application.

15. Support de stockage lisible par ordinateur, les instructions contenues dans le support de stockage étant exécutées par un processeur d'un ordinateur pour permettre à l'ordinateur d'exécuter la méthode de traitement de l'information de l'une des revendications 1 à 7.
